(19)

Europäisches
Patentamt
European
Patent Office
Office européen
des brevets

(11)  **EP 1 843 169 B1**

(12)  **EUROPEAN PATENT SPECIFICATION**

(45) Date of publication and mention
of the grant of the patent:
**15.07.2009  Bulletin 2009/29**

(51) Int Cl.:
***G01S 5/04*** *(2006.01)*

(21) Application number: **06251803.0**

(22) Date of filing: **31.03.2006**

(54)  **A method and apparatus for object localization from multiple bearing lines**

Verfahren und Vorrichtung zur Objektortung aus mehrere Peillinien

Procédé et appareil de localisation de l'objet à partir d'une pluralité de lignes de pointage

(84) Designated Contracting States:
**DE FR GB**

(43) Date of publication of application:
**10.10.2007  Bulletin 2007/41**

(73) Proprietors:
• **Mitsubishi Electric Information Technology Centre**
**Europe B.V.**
**Guildford GU2 7YD (GB)**
Designated Contracting States:
**GB**
• **MITSUBISHI DENKI KABUSHIKI KAISHA**
**Chiyoda-ku, Tokyo 100-8310 (JP)**
Designated Contracting States:
**DE FR**

(72) Inventor: **Szajnowski, Wieslaw Jerzy**
**Guildford**
**Surrey, GU1 2AR (GB)**

(74) Representative: **Burke, Steven David et al**
**R.G.C. Jenkins & Co.**
**26 Caxton Street**
**London SW1H 0RJ (GB)**

(56) References cited:
**US-A- 4 806 936          US-A- 5 877 722**
**US-A1- 2004 164 902**

**Description**

**Background of the Invention**

Field of the invention

This invention relates to a method and apparatus for determining an unknown location of an object from bearing lines supplied by multiple sensors distributed over some surveillance region of interest, and is especially, but not exclusively, applicable to dynamically reconfigurable networks of distributed sensors.

Description of the Prior Art

There are many circumstances in which there is a need to detect, localize and track a noncooperative object of interest in some specified surveillance area. Such tasks can be performed by suitable active or passive sensors which can extract useful information by collaborative processing of signals reflected or emitted by that object.

In contrast to applications employing active sensors, such as radar or active sonar, in which the surveillance region of interest is illuminated by an interrogating energy waveform to obtain object-backscattered returns, passive sensors capture only object-generated signals. For example, the movement of people, wheeled or tracked vehicles, speedboats, vibrating machinery can all generate usable acoustic signals, which can be exploited for object detection, localization and tracking.

One area in which object detection and localisation is useful is that of security surveillance with a network of distributed optical and/or acoustic sensors. When an object of interest, such as a vehicle, has been detected and localised, the estimated object position can be utilized by security cameras for aiming and zooming, in order to enhance the quality of recorded images. Such systems may be installed for monitoring purposes in industrial environments, e.g. to offer improved continuous surveillance of critical infrastructure, including power grids, power plants, gas and oil pipelines and water supply systems.

Another application is that of coastguard or littoral surveillance in which speedboats and other surface vessels of interest can be detected and localized by a network of floating buoys employing acoustic sensors and low-power radio transceivers providing an intersensor communication link.

One important application in which the present invention can be utilized is that of bearings-only object localization by a wireless network of unattended ground sensors (UGS) employed to provide an improved security surveillance capability. The network comprises a plurality of passive sensors, dispersed over some surveillance region of interest, and a data fusion centre. The sensors that form the nodes of the network may be of the same type (e.g., all optical, infrared, acoustic, seismic, etc.), or the network may employ disparate sensors. It is assumed that there is provided a radio frequency (RF) link to exchange information between the sensors and the data fusion centre. The main task of the sensor network is to detect the presence of an object of interest and to determine its location.

Prior art document US-A-5,877,722 discloses a method of detection and tracking of targets using multiple bearing-only sensors.

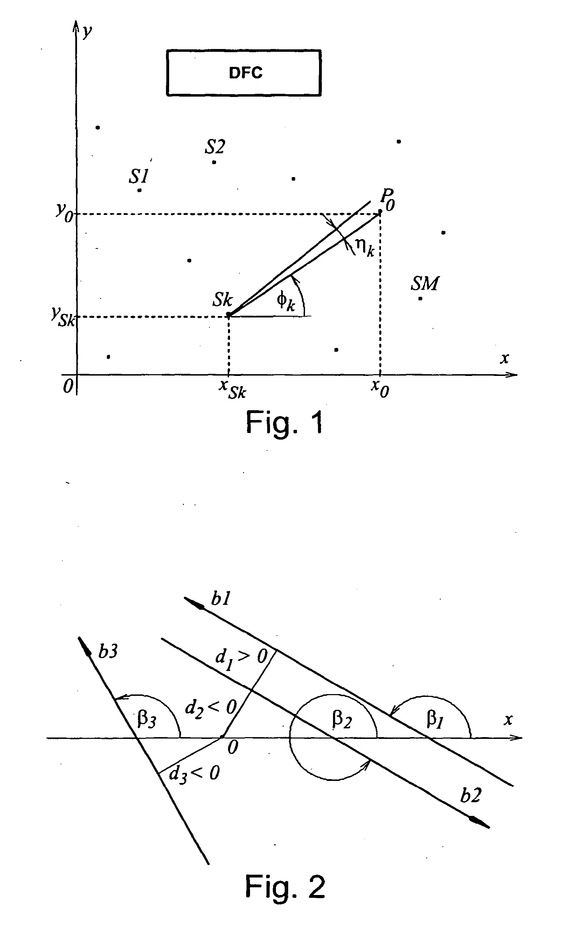

Fig. 1 is an example of a sensor network comprising a plurality of sensors, S1, S2, ... , Sk, ... , SM, arranged in a regular or irregular array, and a data fusion centre DFC. Each sensor is capable of detecting the presence of an object and determining a bearing angle (or direction of arrival, DOA) of a signal emitted by that object. The data fusion centre DFC may 'interrogate' either all the sensors or only a group of sensors selected in a judicious manner to supply bearing information. The bearing information is then suitably processed in the DFC to determine the 'snapshot' coordinates $(x_0, y_0)$ of the object location $P_0$. The DFC may also incorporate a subsystem with tracking capabilities, such as an extended Kalman filter, a particle filter or other similar device.

A well-known class of algorithms for bearings-only object localization is based on modelling each observed bearing angle $\Phi_k{}^*$ as

$$\phi_k^{\bullet} = \phi_k + \eta_k, \qquad k = 1, 2, \ldots, M$$

where $\Phi_k$ is the true bearing angle given by

$$\phi_k = \arctan\left(\frac{y_0 - y_{Sk}}{x_0 - x_{Sk}}\right)$$

where $(x_0, y_0)$ are hypothesized coordinates of the object location, $(x_{Sk}, y_{Sk})$ are known coordinates of the k-th sensor Sk, and $\eta_k$ is the observation error with zero mean and variance $\sigma_k^2$.

The estimated object location $(x_0^*, y_0^*)$ is a pair of such numbers $(x_0, y_0)$ for which the following expression

$$\sum_{k=1}^{M} \frac{(\phi_k - \phi_k^*)^2}{\sigma_k^2}$$

attains its minimum value.

Other known algorithms of this class may attempt to minimize somewhat modified versions of the above cost function, but all the algorithms will suffer to some extent from the following drawbacks:

1. there is no indication of whether or not the 'viewing' geometry is favourable, e.g. whether the problem is ill-conditioned because the bearing lines are almost co-linear;
2. there is no guarantee that the global minimum has been reached; hence the determined location may differ significantly from the true one;
3. the implementation is based on iterative batch processing rather than recursive processing which, in general, is much more suitable for real-time implementation.

It would therefore be desirable to provide a method and an apparatus for object localization in a more efficient way than that provided by the prior art techniques, especially (but not only) for dynamically reconfigurable networks of distributed passive sensors with limited computation and communication capabilities.

## Summary of the Invention

Aspects of the present invention are set out in the accompanying claims.

Some aspects of the invention use techniques which involve mapping a set of bearing lines into points which will theoretically, as a consequence of the mapping procedure, lie on a cosine curve (which term is used herein as synonymous with sine curve). The position of the object to be localised will determine the phase and amplitude of the cosine curve. Accordingly, the location of the object can be determined by finding the phase and amplitude of the cosine curve substantially fitting the points, which can be achieved in a efficient manner, for example using known curve-fitting algorithms. Preferably the parameters of the cosine curve are determined by combining the coordinates of the points in a particular manner, preferably using various averages. A particularly preferred embodiment described below uses a technique analogous to quadrature demodulation in signal processing to extract orthogonal components of mapped bearing lines and then combines the components to derive the Cartesian coordinates of the object location.

The principle of operation of the preferred embodiments is described below.

In stochastic geometry, it is known that a directed line $b$ (e.g., a bearing line emanating from a sensor) may be characterized by two parameters $d$ and $\beta$, where $d$ is the perpendicular (signed) distance of $b$ from a reference location or point (e.g. an origin $0$), and $\beta$ is an angle, measured in an anti-clockwise direction, between the line $b$ and a reference directed line such as an x axis, north or other direction. The parameter $d$ is positive if the reference point lies to the left of the line, as we 'look along it', and $d$ is negative if the reference point lies to the right of the line. Fig. 2 depicts examples of bearing lines, including two lines ($b1$ and $b2$) that are anti-parallel.

Each directed line $b$ in the xy-plane is determined uniquely by a corresponding pair of parameters $(d, \beta)$; in other words, there is one-to-one correspondence between all directed lines $\{bk\}$ in the xy-plane and the points $\{(d_k, \beta_k)\}$ on the infinite cylinder, defined by

$$\{(d, \beta) : -\infty < d < \infty, \ 0 \le \beta < 2\pi\}$$

Accordingly, the infinite cylinder with unit radius determines the ($d$,β)-space which includes <u>all</u> directed planar lines.

As known from stochastic geometry, when the $(d,\beta)$ parameterisation is used to represent lines on a plane, the probabilistic characterization of the lines is invariant under the group of rigid motions (translations and rotations) in the plane. Therefore, for the purpose of object localization and tracking such parameterisation is superior to other parameterisations, such as the slope-intercept one, used in other applications.

A preferred and independent aspect of the invention operates according to the following principles, although it should be noted that particular embodiments of the invention may not perform the actual steps as described, but may instead operate using equivalent techniques.

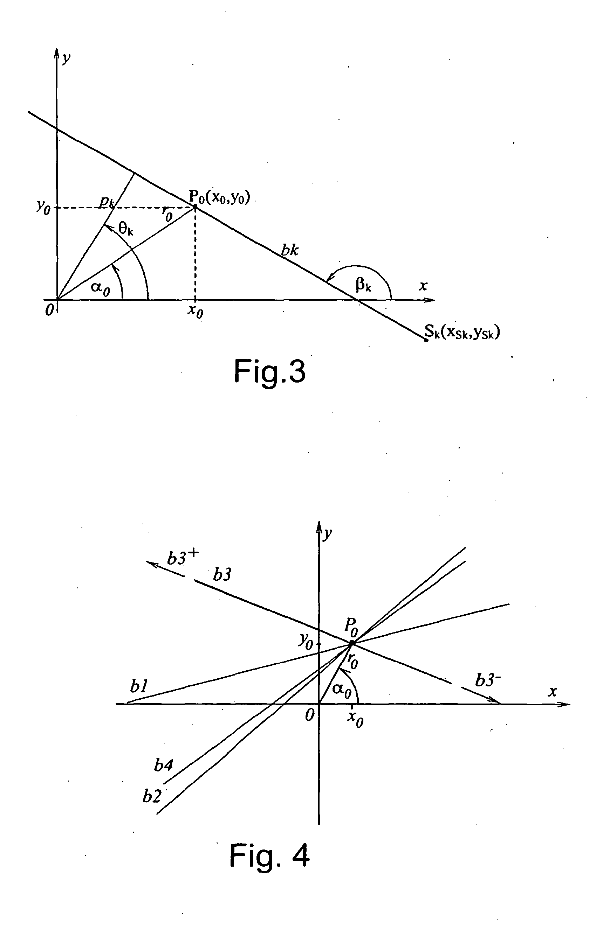

For the purpose of object localisation it is convenient to transform the ($d$,β)-space of bearing lines into an equivalent ($p$,θ)-space as follows. Let ($x_0$,$y_0$) be the coordinates of a stationary point $P_0$ to be localized, and let $bk$ be any bearing line, from any sensor $S_k$, passing through $P_0$, as shown in Fig. 3. By construction,

$$p_k = r_0 \cos(\theta_k - \alpha_0) \qquad\qquad (1)$$

where θ is the angle that the perpendicular $p_k$ makes with the x-axis, and $r_0$ and $\alpha_0$ are the polar coordinates

$$r_0 = \sqrt{x_0^2 + y_0^2}\ , \qquad\qquad \alpha_0 = \arctan\left(\frac{y_0}{x_0}\right)$$

of the point $P_0$.

When the value of angle θ is allowed to vary over the entire (0, 2π)-range, equation (1) will represent <u>all</u> bearing lines passing through the point $P_0$. For illustrative purposes, Fig. 4 depicts examples of bearing lines passing through $P_0$; lines, $b1, b2$ and $b4,$ are undirected, whereas lines $b3^+$ and $b3^-$ have opposite direction.

Equation (1) may alternately be viewed as a unique representation of the *point* $P_0$ on the surface of an infinite cylinder with unit radius:

$$\{\,(\,p\,,\theta\,):-\infty\,<\,p\,<\,\infty\,,\ 0 \le \theta < 2\pi\,\}$$

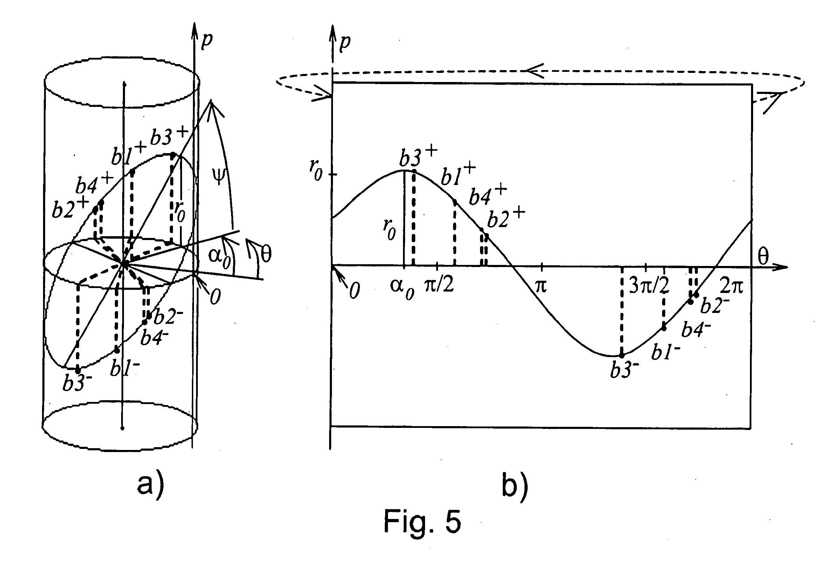

From those two interpretations of equation (1) it follows that each point P(x,y) in the xy-plane will be represented by a respective *ellipse* obtained by cutting the unit-radius cylinder by a plane, as shown in Fig. 5a. In particular, polar coordinates, $r_0$ and $\alpha_0$, of a specified point $P_0$ can be determined from the elevation angle ψ, as $r_0 = \tan\psi$, and from the azimuth angle $\alpha_0$. All bearing lines passing through the point $P_0$ are represented by points on the ellipse. For example, the directed bearing lines $b3^+$ and $b3^-$ shown in Fig. 4 appear as corresponding *points $b3^+$ and $b3^-$.*

In accordance with the adopted parameterisation, to each undirected bearing line in the xy-plane, such as lines $b1, b2$ and $b4$ shown in Fig. 4, there corresponds a pair of points lying on the ellipse. These pairs of points, such as: $b1^+$ and $b1^-, b2^+$ and $b2^-, b4^+$ and $b4^-,$ are reflections of each other. As seen from Fig. 5a, as the line direction changes, the point jumps to the opposite wall of the cylinder, while the value of the p-parameter changes its sign.

When the surface of the cylinder is unfolded, the ellipse appears as one cycle of a cosine wave, as shown in Fig. 5b. While the period of the cosine wave is equal to 2π, the amplitude $r_0$ and starting phase $\alpha_0$ are equal to the respective polar coordinates, $r_0$ and $\alpha_0$, of the point $P_0$. Two points representing opposite directions of a bearing line passing through $P_0$ are shifted (cyclically) on the cosine wave with respect to each other by π. Although the p-coordinates of these points have equal magnitudes, each of them retains the sign of the corresponding direction of the bearing line. When there are no observation errors, each point of the pair carries the same information as the other one.

The problem of determining the unknown object location ($x_0$, $y_0$) in the (x,y)-plane from a plurality of bearing lines *{bk},* supplied by respective sensors {Sk}, is reduced to fitting in a ($p$,θ)-space a cosine wave with known period (but unknown amplitude and phase) to a plurality of points, where each such point represents a respective bearing line. More specifically, the unknown amplitude $r_0$ and the unknown phase $\alpha_0$ define the cosine wave to be fitted and are equal to the respective polar coordinates of the point to be localized.

Because in practice each bearing line $bk$ is corrupted by some measurement error, the coordinates ($p_k$,θ$_k$) of the corresponding point on the surface of the cylinder will be perturbed. Consequently, the task of fitting a sine wave to a plurality of given points is far from being trivial. In principle, any suitable robust numerical algorithm can be utilized for this purpose. However, in the preferred embodiments of the invention described below the parameters representing the multiple bearing lines are processed using techniques which offer the following advantages:

- the method is based on a closed-form solution to the problem; hence no iterative computation steps are needed;
- the method can utilize input data in a recursive manner to perform object localization and facilitate tracking;
- the method provides a measure indicative of the 'goodness of viewing geometry'; therefore it can be utilized for selecting a group of sensors that can perform object localization in a most efficient manner;
- the method can be made sufficiently robust to process input data corrupted by noise and other interference;
- for most applications, the method can be implemented in real-time even with a standard digital signal processor (DSP) or a suitable low-complexity FPGA.

In implementing these preferred techniques, a bearing angle $\beta_k$ provided by sensor Sk is used together with known sensor coordinates $(x_{Sk}, y_{Sk})$ to determine the parameters $(p_k, \theta_k)$ of a point representing the corresponding bearing line $bk$ in the $(p, \theta)$-space. The values of $\theta_k$ and $p_k$ are obtained from

$$\theta_k = \beta_k - \pi/2, \quad p_k = x_{Sk} \cos\theta_k + y_{Sk} \sin\theta_k, \quad k = 1, 2, \ldots, M \quad (2)$$

It is to be noted that $\theta_k$ could be any value within the range $(0, 2\pi)$, depending on the direction of the bearing, and $p_k$ can be either negative or positive, depending on both the direction of the bearing and the position of the closest point on the bearing line relative to the reference location.

The parameter $p_k$ has normalized components (which can also have positive and negative values), which can be derived by resolving each parameter $p_k$ at the corresponding angle $\theta_k$ using orthogonal trigonometric functions, in this case $\sin\theta_k$ and $\cos\theta_k$. Thus, averages Q and I of these components are determined as follows:

$$Q \triangleq \frac{1}{M} \sum_{k=1}^{M} p_k \sin\theta_k, \qquad I \triangleq \frac{1}{M} \sum_{k=1}^{M} p_k \cos\theta_k \quad (3)$$

It can be seen from Fig. 3 that

$$p_k = r_0 \cos(\theta_k - \alpha_0), \qquad k = 1, 2, \ldots M, \quad 0 \le \theta < 2\pi$$

Hence:

$$p_k = r_0 (\sin\theta_k \sin\alpha_0 + \cos\theta_k \cos\alpha_0)$$

Thus:

$$p_k = r_0 \sin\alpha_0 \sin\theta_k + r_0 \cos\alpha_0 \cos\theta_k = y_0 \sin\theta_k + x_0 \cos\theta_k$$

The averages Q and I can thus be expressed as

$$Q = \frac{y_0}{M} \sum_{k=1}^{M} \sin^2\theta_k + \frac{x_0}{M} \sum_{k=1}^{M} \sin\theta_k \cos\theta_k$$

$$I = \frac{x_0}{M} \sum_{k=1}^{M} \cos^2 \theta_k + \frac{y_0}{M} \sum_{k=1}^{M} \sin \theta_k \cos \theta_k$$

Assuming S, C, and P are the auxiliary averages defined as follows

$$S \triangleq \frac{1}{M} \sum_{k=1}^{M} \sin^2 \theta_k \; , \qquad C \triangleq \frac{1}{M} \sum_{k=1}^{M} \cos^2 \theta_k \qquad (4)$$

$$P \triangleq \frac{1}{M} \sum_{k=1}^{M} \sin \theta_k \cos \theta_k \qquad (5)$$

then Q and I can be expressed as

$$Q = P x_0 + S y_0$$

$$I = C x_0 + P y_0$$

Consequently, the Cartesian coordinates, $x_0$ and $y_0$, of a point $P_0$ at which all the M bearing lines $\{bk\} = \{(p_k, \theta_k); k = 1, 2, \ldots , M\}$ intersect can be determined from the following two <u>linear</u> equations

$$P x + S y - Q = 0 \qquad (6)$$

$$C x + P y - I = 0 \qquad (7)$$

The two lines, given by equations (6) and (7), may be viewed as two *metabearing* lines: Q-line and I-line. Their intersection yields the Cartesian coordinates

$$x_0 = \frac{IS - QP}{SC - P^2} \; , \qquad y_0 = \frac{QC - IP}{SC - P^2} \qquad (8)$$

of the point $P_0$ at which all the M bearing lines intersect.

The values $x_0$, $y_0$ uniquely define the polar coordinates $r_0$, $\alpha_0$ of the point $P_0$, and thus, as can be seen from the foregoing, are parameters defining the cosine wave to be fitted to the points representing the bearing lines.

The orthogonal functions $\sin\theta_k$ and $\cos\theta_k$ resolve the parameter $p_k$ into components which correspond to directions parallel to the Cartesian x and y axes, with the x axis aligned with the reference direction. This is preferred but not essential. The values $\theta_k$ could be adjusted, to resolve the parameter $p_k$ into components which are rotated relative to the reference direction.

Instead of using averages of the various parameters mentioned above, other quantities (such as sums) which are proportional to the averages may be used. The parameters may also be combined in other ways, such as by taking a trimmed or weighted average, the median value, etc.

Because the two intersecting metabearing lines, Q-line and I-line, encapsulate information concerning the 'viewing' geometry of the M bearing lines, it is of interest to determine the angle between these lines. The acute angle ξ between the lines can be obtained from

$$\xi \;=\; \arctan \left| \frac{SC - P^2}{P} \right| \qquad\qquad (9)$$

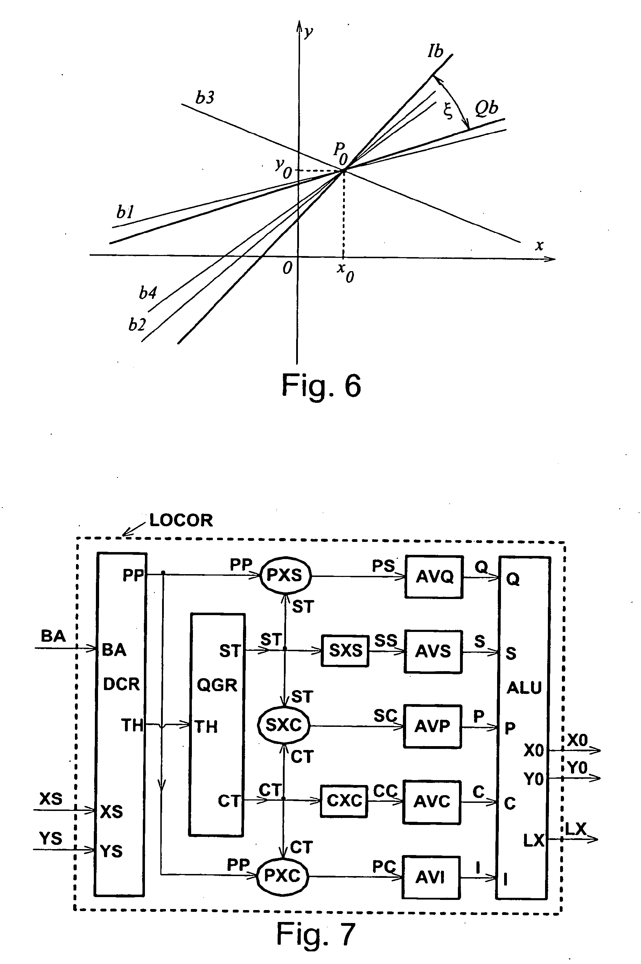

As an example, Fig. 6 shows the four bearing lines of Fig. 4 and the angle ξ between the resulting two metabearing lines, Q-line and I-line.

The 'viewing' geometry representing the relationship between the bearing lines (i.e. the positions of the observation locations relative to each other and to the object) becomes more and more favourable when the value of the angle ξ is changing from zero (coinciding or co-linear metabearing lines) to $\pi/2$ (perpendicular metabearing lines). Preferred embodiments of the invention are arranged to calculate this value, so that an indication of the quality of the estimate of the object location can be generated and/or the sensor outputs can be selectively processed in order to improve the quality.

The Q-line and the I-line can also be regarded as a result of applying a data compression procedure to M bearing lines in order to obtain just two metabearing lines (i.e., compression ratio being equal to M/2).

The mapping procedure discussed above is preferred but not essential. For example, it would be possible to use a mapping procedure whereby $\theta_k$ varies between 0 and $\pi$, or where $p_k$ is always positive (or negative). Because of the periodicity and symmetry of cosine curves, the phase and amplitude of the cosine curve would still be determinable.

The above method can be utilized to develop various embodiments of a *topologic* correlator which may be incorporated into a data fusion centre to process efficiently bearing information supplied by a plurality of passive sensors. Some illustrative examples of topologic correlators constructed in accordance with the invention are presented below.

In some embodiments of the invention, the data provided by the various sensors is weighted so that different sensors have different influences on the calculation of the object location. (The term "weighting" is intended to include the possibility of simply disregarding selected sensor outputs.) The weighting can be determined by various factors, such as the signal-to-noise ratios for the different sensors. Alternatively, the weighting can be altered in order to improve the quality of the resulting location estimate as indicated by the calculated angle between the metabearing lines. These are considered independent aspects of the invention, which are preferably, but not necessarily, used in conjunction with the techniques described above for performing the calculation of object location.

**Brief Description of the Drawings**

Arrangements embodying the invention will now be described by way of example with reference to the accompanying drawings, in which:

Fig. 1 is an example of a sensor network utilized to localize an object $P_0$ and to which the present invention can be applied.

Fig. 2 depicts an example showing how bearing lines can be represented.

Fig. 3 illustrates a representation in the $(p,\theta)$-space of a bearing line passing through point $P_0$.

Fig. 4 depicts examples of bearing lines passing through point $P_0$.

Fig. 5 comprises Fig. 5a, illustrating schematically the representation of a point $P_0$ in the xy-plane by an ellipse obtained by cutting a unit-radius cylinder by a plane, and Fig. 5b, showing one cycle of a cosine wave obtained from the ellipse by unfolding the surface of the cylinder.

Fig. 6 shows four bearing lines and the acute angle between two metabearing lines.

Fig. 7 is a functional block diagram of a topologic correlator constructed in accordance with the invention.

Fig. 8 is a functional block diagram of a modified topologic correlator constructed in accordance with the invention.

Fig. 9 is a functional block diagram of a topologic correlator constructed in accordance with the invention and capable of processing bearing lines determined by sensors with different signal-to-noise ratio.

Fig. 10 is a functional block diagram of an example of a data fusion centre incorporating a topologic correlator constructed in accordance with the invention.

Fig. 11, comprising Figs. 12a and 12b, depicts schematically examples of poor and more favourable 'viewing' geometry.

**Detailed Description Of The Preferred Embodiments**

First embodiment

Fig. 7 is a functional block diagram of a topologic correlator LOCOR constructed in accordance with the invention. The correlator comprises a data converter DCR, a quadrature generator QGR, three multipliers: PXS, SXC and PXC, two squarers: SXS and CXC, five averagers: AVQ, AVS, AVP, AVC and AVI, and an arithmetic/logic unit ALU. As in other embodiments described below, all individual units can readily be constructed from hardware and/or software by anyone skilled in the art, given an understanding of the required functionality as set out in the present specification.

Bearing angles $\{\beta_k; k = 1, 2, ... , M\}$ obtained from M sensors are applied to an input BA, whereas the known coordinates $\{(x_{sk}, y_{sk}); k = 1, 2, ... , M\}$ of the M sensors $\{Sk\}$ are applied to inputs XS and YS of the converter DCR.

The converter processes jointly, according to equation (2), bearing angles $\{\beta_k\}$ and sensor coordinates $\{(x_{Sk}, y_{Sk})\}$ to produce parameters $\{(p_k, \theta_k)\}$ which represent respective bearing lines in the $(p,\theta)$-space. The values TH of $\theta_k$, appearing at output TH of the data converter DCR, are used by the quadrature generator QGR to produce at its respective outputs ST and CT values of $\sin\theta_k$ and $\cos\theta_k$.

The values PP of $p_k$, obtained at output PP of the data converter DCR, are multiplied in the multiplier PXS by the values ST of $\sin\theta_k$, and the resulting products $(p_k \sin\theta_k)$ are applied to input PS of the averager AVQ. Similarly, the values PP of $p_k$ are multiplied in the multiplier PXC by the values CT of $\cos\theta_k$, and the resulting products $(p_k \cos\theta_k)$ are applied to input PC of the averager AVI.

The values ST and CT of $\sin\theta_k$ and $\cos\theta_k$, supplied by the quadrature generator QGR, are also used by:

- the multiplier SXC, to produce values SC of products $(\sin\theta_k \cos\theta_k)$ to drive input SC of the averager AVP;
- the squarer SXS, to produce values SS of $\sin^2\theta_k$ to drive input SS of the averager AVS;
- the squarer CXC, to produce values CC of $\cos^2\theta_k$ to drive input CC of the averager AVC.

The values of averages Q, I, S, C and P are supplied by the respective averagers to the arithmetic/logic unit ALU that determines:

1. the values X0 and Y0 of the coordinates $(x_0, y_0)$ of an object location, according to equation (8);
2. the value LX of the metabearing intersection angle $\xi$, according to equation (9); the value LX is indicative of the 'goodness' of the 'viewing' geometry.

The values X0, Y0 and LX are produced by the ALU at its respective outputs.

Second embodiment

Making use of the trigonometric identities

$$2\sin\theta\cos\theta = \sin 2\theta \; , \quad 2\cos^2\theta = 1 + \cos 2\theta \; , \quad 2\sin^2\theta = 1 - \cos 2\theta$$

leads to a significant modification of the topologic correlator LOCOR constructed in accordance with the method of the invention. Now, the three auxiliary averages, S, C and P, can be determined from

$$S = \frac{1-CC}{2}, \quad C = \frac{1+CC}{2}, \quad P = \frac{SS}{2} \qquad (10)$$

$$CC \triangleq \frac{1}{M} \sum_{k=1}^{M} \cos 2\theta_k, \qquad SS \triangleq \frac{1}{M} \sum_{k=1}^{M} \cos 2\theta_k$$

In this implementation, no squaring circuits are needed, and the three auxiliary averages, S, C and P, can be obtained by employing only two averagers: one for $\cos 2\theta_k$ and one for $\sin 2\theta_k$.

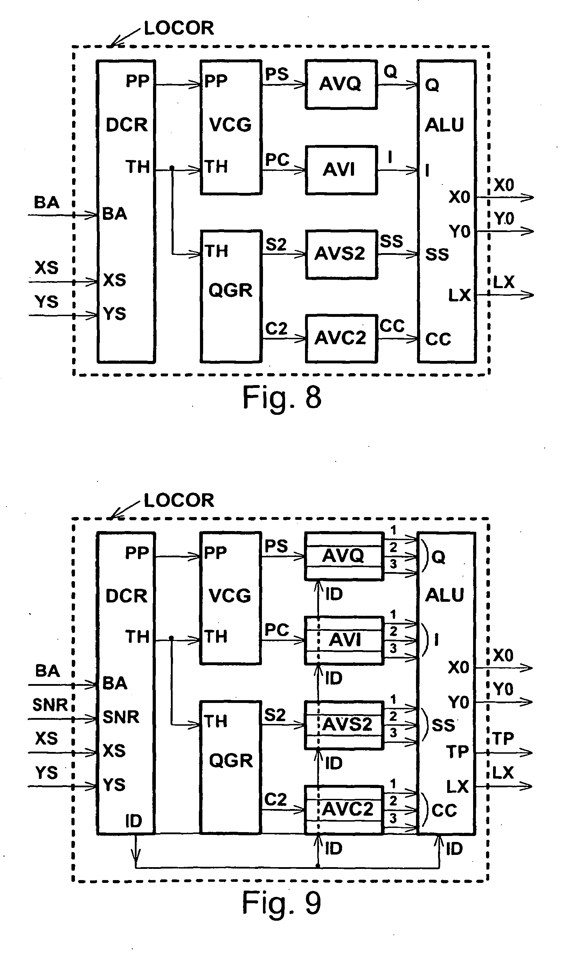

Fig. 8 is a functional block diagram of a modified topologic correlator LOCOR constructed in accordance with this embodiment of the invention. The correlator comprises a data converter DCR, a vector generator VCG, a quadrature generator QGR, four averagers: AVQ, AVI, AVS2 and AVC2, and an arithmetic/logic unit ALU.

Bearing angles $\{\beta_k;\ k = 1, 2, \dots , M\}$ obtained from M sensors are applied to input BA, whereas the known coordinates $\{(x_{sk}, y_{sk});\ k = 1, 2, \dots , M\}$ of the M sensors $\{Sk\}$ are applied to inputs XS and YS of the converter DCR. The converter processes jointly, according to equation (2), bearing angles $\{\beta_k\}$ and sensor coordinates $\{(x_{sk}, y_{sk})\}$ to produce parameters $\{(p_k, \theta_k)\}$ which represent respective bearing lines in the $(p,\theta)$-space.

The values TH of $\theta_k$, appearing at output TH of the data converter DCR, are used by the quadrature generator QGR to produce at its respective outputs S2 and C2 values of $\sin 2\theta_k$ and $\cos 2\theta_k$. The values appearing at outputs S2 and C2 are applied, respectively, to averagers AVS2 and AVC2.

The vector generator VCG produces directly at its two outputs, PS and PC, products $(p_k \sin\theta_k)$ and $(p_k \cos\theta_k)$ in response to values PP of $p_k$ and values TH of $\theta_k$ supplied by the data converter DCR at its respective outputs PP and TH.

The values appearing at outputs PS and PC are applied, respectively, to averagers AVQ and AVI.

The values of averagers Q, I, SS and CC are supplied by the respective averagers to the arithmetic/logic unit ALU that determines:

    1. the values X0 and Y0 of the coordinates $(x_0, y_0)$ of an object location, according to equations (8) and (10);

    2. the value LX of the metabearing intersection angle $\xi$, according to equations (9) and (10); the value LX is indicative of the 'goodness' of the 'viewing' geometry.

The values X0, Y0 and LX are produced by the ALU at its respective outputs.

Third embodiment

In many practical cases, some information may be available regarding the accuracy with which the bearing angles $\{\beta_k;\ k = 1, 2, \dots , M\}$ have been estimated. For example, each sensor Sk may supply a value $g_k$ of the observed signal-to-noise ratio (SNR) that affects the accuracy of angle determination. Such information can be utilized by arrangements of the present invention as follows:

    1. The observed values $g_k$ of the signal-to-noise ratio are compared to a set of predetermined thresholds to form a number N of classes, each class being characterized by a different range of the SNR values. For example, three classes may be formed to indicate bearing observations at low SNR, moderate SNR or high SNR.

    2. Parameters $(p_k, \theta_k)$ obtained from reported bearing angles $\beta_k$ and known sensor locations $(x_{Sk}, y_{Sk})$ are used to form N groups. The parameters $(p_k, \theta_k)$ will belong to the same group if the associated values $g_k$ of the signal-to-noise ratio fall into the same range of SNR values. For example, three groups may be formed; each group will comprise parameters obtained for the same range (low, moderate or high) of the SNR.

    3. The parameters $(p_k, \theta_k)$ within each group are then utilized to determine the coordinates $(x_0, y_0)$ of the point $P_0$. As a result, there will be the same number N of coordinate pairs $(x_0, y_0)$ as the number of groups. For example, in the case of three groups (i.e., three ranges of SNR values), the determined coordinates will be:

$$(x_0, y_0)_{low}, \quad (x_0, y_0)_{moderate}, \quad (x_0, y_0)_{high}$$

    4. The coordinates determined within each of N groups are then combined as follows:

$$x_0 = \frac{1}{W} \sum_{i=1}^{N} w_i\, x_0^{(i)}\ , \qquad y_0 = \frac{1}{W} \sum_{i=1}^{N} w_i\, y_0^{(i)}$$

where

$$w_i = L_i \, g_i \, , \quad \sum_{i=1}^{N} w_i = W$$

where $x_0^{(i)}$, $y_0^{(i)}$ are the calculated coordinates $x_0$, $y_0$ for each respective group I, $L_i$ is the number of observations falling in group i, and $g_i$ is the average SNR for that group. Therefore, the product $L_i g_i$ can be viewed as a total average power received by sensors belonging to the same group i, where i = 1, 2, ... , N.

As will be explained in more detail below, a similar averaging procedure may be applied to angles $\{\xi\}$.

Fig. 9 is a functional block diagram of a topologic correlator LOCOR constructed in accordance with the invention. The correlator comprises a data converter DCR, a vector generator VCG, a quadrature generator QGR, four blocks of averagers: AVQ, AVI, AVS2 and AVC2, and an arithmetic/logic unit ALU.

Bearing angles $\{\beta_k; k = 1, 2, ... , M\}$ together with values of the signal-to-noise ratio $\{g_k; k = 1, 2, ... , M\}$ are applied to inputs BA and SNR, respectively, whereas the known coordinates $\{(x_{Sk}, y_{Sk}); k = 1, 2, ... , M\}$ of the M sensors $\{Sk\}$ are applied to inputs XS and YS of the data converter DCR.

The data converter DCR processes jointly, according to equation (2), bearing angles $\{\beta_k\}$ and sensor coordinates $\{(X_{Sk}, Y_{Sk})\}$ to produce parameters $\{(p_k, \theta_k)\}$ which represent respective bearing lines in the $(p,\theta)$-space.

For each pair of parameters $(p_k, \theta_k)$, the data converter DCR determines a group index ID depending on the value of the signal-to-noise ratio gk associated with the underlying bearing angle $\beta_k$. The group index ID is an integer number, and its value is determined as follows:

| | | |
|---|---|---|
| ID = 0, if | $g_i < SNR_{th0}$, | observation discarded |
| ID = 1, if | $SNR_{th0} < g_i < SNR_{th1}$, | low-SNR observation |
| ID = 2, if | $SNR_{th1} < g_i < SNR_{th2}$, | moderate-SNR observation |
| ID = 3, if | $g_i > SNR_{th2}$, | high-SNR observation |

where $SNR_{th0}$, $SNR_{th1}$ and $SNR_{th2}$ are some predetermined suitably chosen threshold values.

The values TH of $\theta_k$, appearing at output TH of the data converter DCR, are used by the quadrature generator QGR to produce at its respective outputs S2 and C2 values of $\sin 2\theta_k$ and $\cos 2\theta_k$. The values appearing at outputs S2 and C2 are applied, respectively, to two blocks of averagers, AVS2 and AVC2.

The vector generator VCG produces directly at its two outputs, PS and PC, products $(p_k \sin\theta_k)$ and $(p_k \cos\theta_k)$ in response to values PP of $p_k$ and values TH of $\theta_k$ supplied by the data converter DCR at its respective outputs PP and TH. The values appearing at outputs PS and PC are applied, respectively, to two blocks of averagers AVQ and AVI.

Each of the four blocks of averagers, AVQ, AVI, AVS2 and AVC2, comprises three identical averagers, each corresponding to a specific (non-zero) value of the group index ID. A specific averager within each group will be assigned to the respective data input (PS, SS, S2 or C2) depending on the value of the index ID associated with the underlying bearing angle $\beta_k$. As a result, each of four blocks of averagers has three outputs, each output corresponding to a different value of group index ID.

The four output values, Q, I, SS and CC, supplied by the averagers with the same (non-zero) index ID = i, where i = 1, 2, 3, are utilized by the arithmetic/logic unit ALU to determine the coordinates $(x_0^{(i)}, y_0^{(i)})$ from

$$x_0^{(i)} = \frac{I^{(i)} S^{(i)} - Q^{(i)} P^{(i)}}{S^{(i)} C^{(i)} - [\, P^{(i)} \,]^2} \, , \quad y_0^{(i)} = \frac{Q^{(i)} C^{(i)} - I^{(i)} P^{(i)}}{S^{(i)} C^{(i)} - [\, P^{(i)} \,]^2}$$

Finally, the resulting coordinates $(x_0, y_0)$ of an object being localized are determined by combining the coordinates $\{(x_0^{(i)}, y_0^{(i)}); i = 1, 2, 3\}$ as follows

$$x_0 = \frac{w_1 x_0^{(1)} + w_2 x_0^{(2)} + w_3 x_0^{(3)}}{W} \, , \quad y_0 = \frac{w_1 y_0^{(1)} + w_2 y_0^{(2)} + w_3 y_0^{(3)}}{W}$$

with W = W$_1$ + W$_2$ + W$_3$, and W$_1$ = L1 G1, W$_2$ = L2 G2, and W$_3$ = L3 G3, where L1, L2 and L3 are the numbers of observations falling respectively into groups 1, 2 and 3, and G1, G2 and G3 are the average signal-to-noise ratios assigned to each corresponding group.

As a result, each weight w$_i$ = Li Gi, i = 1, 2, 3, can be viewed as a total average power received by sensors belonging to the same group. Also, the sum W of all the weights w$_i$ is indicative of the total power received by the sensors employed for localization. The value W appears at the output TP of the arithmetic/logic unit ALU.

In a similar fashion, the four output values, Q, I, SS and CC, supplied by the averagers with the same (non-zero) index ID = i, where i = 1, 2, 3, may be utilized by the arithmetic/logic unit ALU to determine the intersection angles $\xi^{(i)}$ from

$$\xi^{(i)} = \arctan\left|\frac{S^{(i)}C^{(i)} - [P^{(i)}]^2}{P^{(i)}}\right|, \qquad i = 1,2,3$$

Then, the angles are combined as follows

$$\xi = \frac{w_1\,\xi^{(1)} + w_2\,\xi^{(2)} + w_3\,\xi^{(3)}}{W}$$

with W = w$_1$ + w$_2$ + w$_3$, and w$_1$ = L1 G1, w$_2$= L2 G2, and w$_3$ = L3 G3, where L1, L2 and L3 are the numbers of observations falling respectively into groups 1, 2 and 3, and G1, G2 and G3 are the average signal-to-noise ratios allocated to each corresponding group. The value LX of the average angle $\xi$ appears at the output LX of the arithmetic/logic unit ALU.

The value LX indicates the quality of the estimate of the object location, based on the relative positions of the sensors and the object. If desired a suitable algorithm could be used to vary the weighting in accordance with the calculated value LX in order to improve the quality. In this situation the weighting would thus be a function of both (i) the SNR values for the respective sensors and (ii) their locations relative to each other and to the object. The weighting could instead be based on either one of these factors or on any other factor or combination of factors.

In some cases, it may be preferable not to apply angle averaging but utilize the determined angle values $\xi^{(i)}$ for further processing.

Example of incorporating a topologic correlator LOCOR into a data fusion centre

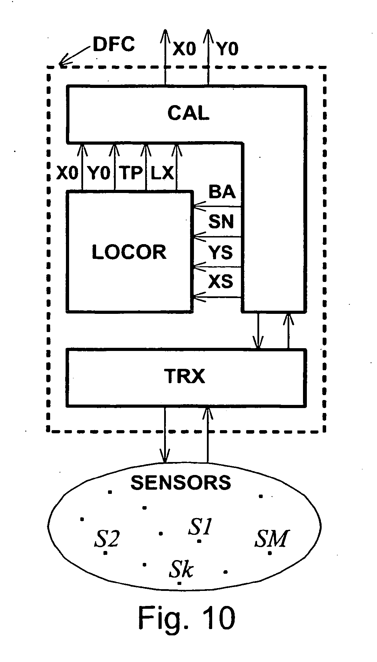

Fig. 10 is functional block diagram of a data fusion centre DFC incorporating a topologic correlator LOCOR constructed in accordance with the invention. The data fusion centre comprises a transceiver TRX, a topologic correlator LOCOR and a control/arithmetic/logic unit CAL. For the illustrative purposes, it is assumed that the third embodiment described above is employed as the correlator LOCOR, though with appropriate modifications either of the other embodiments could be used instead.

The control/arithmetic/logic unit CAL interrogates via the transceiver TRX a selected group of sensors {S} to obtain from them information on determined bearing angles and registered signal-to-noise ratios. This information, together with sensor coordinates, is passed to the topologic correlator LOCOR via internal links BA, SN, YS and XS for further processing.

The correlator LOCOR determines the object location, the total power of signals received by the sensors and the angle of intersection of metabearing lines. This information is sent to the unit CAL via internal links X0, Y0, TP and LX.

In bearings-only object localization, the selection of a group of sensors by the DFC for surveillance purposes could be based on two main criteria:

1. a sufficiently high level of power of signals intercepted by the group;
2. a favourable 'viewing geometry' of an object under surveillance, as determined by measuring the angle $\xi$ of intersection of metabearing lines.

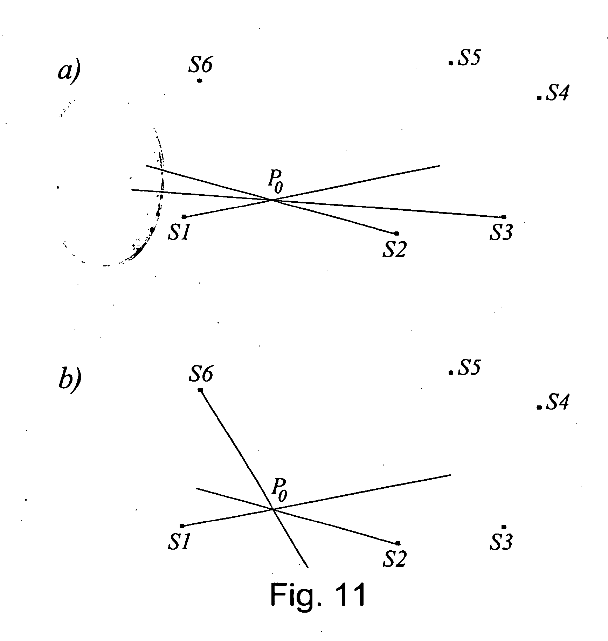

Therefore, if the control/arithmetic/logic unit CAL decides that the total power is too low and/or the 'viewing geometry' is not favourable, it will attempt to form a new group of sensors. Some 'old' sensors may be retained and new sensors may be added. Then, the performance of the new group will be assessed on the basis of the total received power and the 'viewing geometry'. As an example, the 'viewing geometry' depicted in Fig. 11a is poor, whereas the 'viewing geometry' obtained by replacing sensor S3 by sensor S6 is more favourable, as seen from Fig. 11b.

In the preceding discussion, the SNR values of the sensors are used to indicate the quality of the bearing measurements and hence they form bearing error values used for weighting the effect of the bearing measurement and/or the selection of sub-sets of sensors. However, other factors could be used instead of or as well as the SNR values (for example values representing potential quantisation errors).

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

**Claims**

1. A method of determining the location of an object using data representing a set of bearing lines of the object from a plurality of know observation locations, the method **characterised by**:

   for each bearing line, deriving the coordinates of a point which represents the bearing line, the coordinates comprising a first coordinate ($P_k$) representing the distance from a reference location to the closest point on the bearing line, and a second coordinate ($Q_k$) representing the angle of the bearing line with respect to a reference direction, using a mapping procedure according to which the coordinates indicate the direction of the bearing line; and
   deriving parameters defining a cosine curve substantially fitting said points, said parameters representing the object location.

2. A method as claimed in claim 1, wherein the parameters representing the object location are derived by:

   for each point, deriving first and second components by transforming the respective coordinates using, respectively, first and second, orthogonal functions;
   deriving a first quantity I by combining the first components and a second quantity Q by combining the second components; and
   determining the intersection of the lines represented by

   $$P_x + S_y - Q = 0$$

   $$C_x + P_y - I = 0$$

   wherein x, y are Cartesian coordinates and C, S and P are proportional to the averages of the following quantities, respectively:

   $\cos^2 \theta$
   $\sin^2 \theta$
   $\sin \theta \cos \theta$

   where $\theta$ is the second coordinate.

3. A method as claimed in claim 2, including the step of determining the angle between the lines represented by said equations, the angle being indicative of the viewing geometry of the bearing lines.

4. A method as claimed in claim 2 or claim 3, wherein the reference direction is parallel to one of the Cartesian axes.

5. A method as claimed in any preceding claim, therein the mapping procedure is such that the first coordinate is the signed distance between the reference location and the closest point on the bearing line.

6. A method as claimed in any preceding claim, wherein the mapping procedure is such that co-linear bearings of opposite direction have second coordinates which differ from each other by $\pi$.

7. A method according to any preceding claim, including the steps of deriving plural sets of coordinates each representing the object location calculated from data representing a respective group of bearings, and combining the sets in a weighted manner to derive a resultant set of coordinates representing the object location.

8. A method as claimed in claim 7, including the step of allocating the bearings to respective groups in accordance with bearing error values representing characteristics associated with the measurements of the bearings.

9. A method as claimed in claim 8, wherein the bearing error values represent signal-to-noise characteristics of the measurements of the bearings.

10. A method as claimed in any one of claims 7 to 9, including the step of allocating the bearings to respective groups in accordance with the relationships between the bearing lines.

11. A method as claimed in claim 10 when dependent on claim 3, including the step of using said angle between the lines represented by said equations to represent the relationships between the bearing lines.

12. A method according to any preceding claim, including the step of measuring viewing geometry parameters determined by the relationships between groups of bearing lines, selecting a sub-set of said observation locations according to said measured geometry parameters and deriving a set of coordinates representing the object location from data representing the bearing of the object from each of the observation locations of said sub-set.

13. A method as claimed in claim 12 when directly or indirectly dependent on claim 3, including the step of measuring a geometry parameter by determining said angle between the lines represented by said equations.

14. A method as claimed in claim 12 or claim 13, wherein the step of selecting said sub-set also takes into account bearing error values representing characteristics associated with the measurements of the bearings.

15. A method as claimed in claim 14, wherein the bearing error values represent signal-to-noise characteristics of the measurements of the bearings.

16. Apparatus for determining the location of an object using data representing a set of bearing lines of the object from a plurality of known observation locations, the apparatus being arranged to operate according to a method as claimed in any preceding claim.

17. Apparatus as claimed in claim 16, including a network of distributed sensors for generating data representing said bearing lines.

**Patentansprüche**

1. Verfahren zur Bestimmung der Position eines Objektes mithilfe von Daten, die einen Satz aus Peillinien des Objektes darstellen, aus einer Vielzahl von bekannten Überwachungspositionen, wobei das Verfahren **gekennzeichnet ist durch**:

für jede Peillinie Ableiten der Koordinaten eines Punktes, der die Peillinie darstellt, wobei die Koordinaten eine erste Koordinate (Pk) umfassen, die den Abstand von einer Bezugsposition zu dem nächstgelegenen Punkt auf der Peillinie darstellt, und eine zweite Koordinate (Qk), die den Winkel der Peillinie mit Bezug auf eine Bezugsrichtung darstellt, mithilfe eines Mappingverfahrens gemäß dem die Koordinaten die Richtung der Peillinie anzeigen; und
Ableiten von Parametern, die eine Kosinuskurve definieren, welche im Wesentlichen den Punkten entspricht, welche die Objektposition darstellt.

2. Verfahren nach Anspruch 1, wobei die die Objektposition darstellenden Parameter abgeleitet werden durch:

für jeden Punkt Ableiten der ersten und zweiten Komponente durch Umwandeln der entsprechenden Koordinaten mithilfe von ersten bzw. zweiten orthogonalen Funktionen;
Ableiten einer ersten Quantität I durch Kombinieren der ersten Komponenten und eine zweite Quantität Q durch Kombinieren der zweiten Komponenten; und
Bestimmen der Überschneidung der Linien, dargestellt durch

$$Px + Sy - Q = 0$$

$$Cx + Py - I = 0$$

wobei x, y kartesische Koordinaten sind und C, S und P entsprechend proportional zum Durchschnitt der folgenden Quantitäten verlaufen:

$\cos^2 \theta$
$\sin \theta$
$\sin \theta \cos \theta$

wobei $\theta$ die zweite Koordinate ist.

3. Verfahren nach Anspruch 2, umfassend den Schritt des Bestimmens des Winkels zwischen den durch diese Gleichungen dargestellten Linien, wobei der Winkel ein Beispiel für die Sichtgeometrie der Peillinien darstellt.

4. Verfahren nach Anspruch 2 oder 3, wobei die Bezugsrichtung parallel zu einer der kartesischen Achsen verläuft.

5. Verfahren nach einem der vorangegangenen Ansprüche, wobei das Mappingverfahren so aussieht, dass die erste Koordinate der mit Vorzeichen versehene Abstand zwischen der Bezugsposition und dem nächstgelegenen Punkt auf der Peillinie ist.

6. Verfahren nach einem der vorangegangenen Ansprüche, wobei das Mappingverfahren so aussieht, dass kolineare Peillinien gegensätzlicher Richtung zweite Koordinaten aufweisen, die sich durch n unterscheiden.

7. Verfahren nach einem der vorangegangenen Ansprüche, umfassend die folgenden Schritte: Ableiten mehrerer Koordinatensätze, wobei jeder die Objektposition darstellt, die aus den Daten errechnet wurden, welche eine entsprechende Gruppe von Peilwinkeln darstellen, und Kombinieren der Sätze auf gewichtete Art und Weise, um einen resultierenden Koordinatensatz abzuleiten, der die Objektposition darstellt.

8. Verfahren nach Anspruch 7, umfassend den Schritt des Zuweisens der Peillinien zu den entsprechenden Gruppen gemäß Peilfehlerwerten, die Eigenschaften darstellen, welche zu den Messungen der Peilwinkel gehören.

9. Verfahren nach Anspruch 8, wobei die Peilfehlerwerte das Störspannungsverhältnis der Messungen der Peilwinkel darstellen.

10. Verfahren nach einem der Ansprüche 7 bis 9, umfassend den Schritt des Zuweisens der Peilwinkel zu entsprechenden Gruppen gemäß den Verhältnissen zwischen den Peillinien.

11. Verfahren nach Anspruch 10, wenn abhängig von Anspruch 3, umfassend den Schritt des Verwendens des Winkels zwischen den durch diese Gleichungen dargestellten Linien, um die Verhältnisse zwischen den Peillinien darzustellen.

12. Verfahren nach einem der vorangegangenen Ansprüche, umfassend die folgenden Schritte: Messen der Sichtgeometrieparameter, die durch die Verhältnisse zwischen den Gruppen von Peillinien bestimmt wurden, Auswählen einer Teilmenge der Überwachungspositionen gemäß den gemessenen Geometrieparametern und Ableiten eines Koordinatensatzes, der die Objektposition darstellt, aus den Daten, die den Peilwinkel des Objektes darstellt, aus jeder der Überwachungspositionen der Teilmenge.

**13.** Verfahren nach Anspruch 12, wenn direkt oder indirekt von Anspruch 3 abhängig, umfassend den Schritt des Messens eines Geometrieparameters durch Bestimmen des Winkels zwischen den durch diese Gleichungen dargestellten Linien.

**14.** Verfahren nach Anspruch 12 oder 13, wobei der Schritt des Auswählens der Teilmenge ebenfalls die Peilfehlerwerte berücksichtigt, welche die zu den Messungen der Peilwinkel gehörenden Eigenschaften darstellen.

**15.** Verfahren nach Anspruch 14, wobei die Peilfehlerwerte das Störspannungsverhältnis der Messungen der Peilwinkel darstellen.

**16.** Vorrichtung zur Bestimmung der Position eines Objektes mithilfe von Daten, die einen Satz aus Peillinien des Objektes darstellen, aus einer Vielzahl von bekannten Überwachungspositionen, wobei die Vorrichtung angeordnet ist, um gemäß einem Verfahren nach einem der vorangegangenen Ansprüche zu operieren.

**17.** Vorrichtung nach Anspruch 16, umfassend ein Netzwerk aus verteilten Sensoren zum Erzeugen von Daten, welche die Peillinien darstellen.

**Revendications**

**1.** Procédé de détermination de l'emplacement d'un objet en utilisant des données représentant un ensemble de lignes de relèvement de l'objet à partir d'une pluralité d'emplacements d'observation connus, le procédé étant **caractérisé par** les étapes consistant à :

dériver, pour chaque ligne de relèvement, les coordonnées d'un point qui représente la ligne de relèvement, les coordonnées comprenant une première coordonnée ($P_k$) représentant la distance d'un emplacement de référence au point le plus proche sur la ligne de relèvement et une seconde coordonnée ($\theta_k$) représentant l'angle de la ligne de relèvement par rapport à une direction de référence, en utilisant une procédure de cartographie selon laquelle les coordonnées indiquent la direction de la ligne de relèvement ; et
dériver des paramètres définissant une courbe cosinusoïdale fixant sensiblement lesdits points, lesdits paramètres représentant l'emplacement de l'objet.

**2.** Procédé selon la revendication 1, dans lequel les paramètres représentant l'emplacement de l'objet sont dérivés par les étapes consistant à :

dériver, pour chaque point, les premières et secondes composantes par transformation des coordonnées respectives en utilisant, respectivement, les premières et secondes fonctions orthogonales ;
dériver une première quantité I en combinant les premières composantes et une seconde quantité Q en combinant les secondes composantes ; et
déterminer l'intersection des lignes représentées par

$$P_x + S_y - Q = 0$$

$$C_x + P_y - I = 0$$

où x, y sont des coordonnées cartésiennes et C, S et P sont proportionnels aux moyennes des quantités qui suivent, respectivement :

$\cos^2 \theta$
$\sin^2 \theta$
$\sin \theta \cos \theta$

où $\theta$ est la seconde coordonnée.

3. Procédé selon la revendication 2, comprenant l'étape de détermination de l'angle entre les lignes représentées par lesdites équations, l'angle indiquant la géométrie de visualisation des lignes de relèvement.

4. Procédé selon la revendication 2 ou 3, dans lequel la direction de référence est parallèle à l'un des axes cartésiens.

5. Procédé selon l'une quelconque des revendications précédentes, dans lequel la procédure de cartographie est telle que la première coordonnée est la distance signée entre l'emplacement de référence et le point le plus proche sur la ligne de relèvement.

6. Procédé selon l'une quelconque des revendications précédentes, dans lequel la procédure de cartographie est telle que des relèvements colinéaires de sens opposé ont des secondes coordonnées qui diffèrent l'une de l'autre de $\pi$.

7. Procédé selon l'une quelconque des revendications précédentes, comprenant les étapes consistant à dériver plusieurs ensembles de coordonnées représentant chacune l'emplacement de l'objet calculé à partir de données représentant un groupe respectif de relèvements et combiner les ensembles de manière pondérée pour dériver un ensemble de coordonnées obtenu représentant l'emplacement de l'objet.

8. Procédé selon la revendication 7, comprenant l'étape consistant à attribuer les relèvements aux groupes respectifs selon des valeurs d'erreurs de relèvement représentant des caractéristiques associées aux mesures des relèvements.

9. Procédé selon la revendication 8, dans lequel les valeurs d'erreurs de relèvement représentent des caractéristiques signal-bruit des mesures des relèvements.

10. Procédé selon l'une quelconque des revendications 7 à 9, comprenant l'étape consistant à attribuer les relèvements à des groupes respectifs selon les relations entre les lignes de relèvement.

11. Procédé selon la revendication 10 pour autant qu'elle dépende de la revendication 3, comprenant l'étape d'utilisation dudit angle entre les lignes représentées par lesdites équations pour représenter les relations entre les lignes de relèvement.

12. Procédé selon l'une quelconque des revendications précédentes, comprenant l'étape consistant à mesurer des paramètres de géométrie de visualisation déterminées par les relations entre les groupes de lignes de relèvement, sélectionner un sous-ensemble desdits emplacements d'observation selon lesdits paramètres de géométrie mesurés et dériver un ensemble de coordonnées représentant l'emplacement de l'objet à partir de données représentant le relèvement de l'objet issues de chacun des emplacements d'observation dudit sous-ensemble.

13. Procédé selon la revendication 12 pour autant qu'elle dépende directement ou indirectement de la revendication 3, comprenant l'étape de mesure d'un paramètre de géométrie en déterminant ledit angle entre les lignes représentées par lesdites équations.

14. Procédé selon la revendication 12 ou la revendication 13, dans lequel l'étape de sélection dudit sous-ensemble prend également en compte les valeurs d'erreurs de relèvement représentant des caractéristiques associées aux mesures des relèvements.

15. Procédé selon la revendication 14, dans lequel les valeurs d'erreurs de relèvement représentent des caractéristiques signal-bruit des mesures des relèvements.

16. Appareil pour déterminer l'emplacement d'un objet en utilisant des données représentant un ensemble de lignes de relèvement de l'objet provenant d'une pluralité d'emplacements d'observation connus, l'appareil étant aménagé pour fonctionner selon un procédé tel que revendiqué dans l'une quelconque des revendications précédentes.

17. Appareil selon la revendication 16, incluant un réseau de capteurs distribués pour générer des données représentant lesdites lignes de relèvement.

Fig. 1

Fig. 2

Fig.3

Fig. 4

a)

b)

Fig. 5

EP 1 843 169 B1

Fig. 6

Fig. 7

Fig. 8

Fig. 9

Fig. 10

a)

S6

.S5

.S4

$P_0$

S1

S2

S3

b)

S6

.S5

.S4

$P_0$

S1

S2

S3

Fig. 11

**EP 1 843 169 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5877722 A